# EUROPEAN PATENT APPLICATION

(11) **EP 4 324 333 A1**
(43) Date of publication of application: **21.02.2024**
(21) Application number: 22788521.7
(22) Date of filing: 20.01.2022
(51) Int. Cl.: A23L 3/00, A23L 3/16

(54) **METHOD FOR REDUCING CONTAMINATION IN DEHYDRATED PRODUCTS**

(30) Priority: 14.04.2021 MX 2021004306
(71) Applicant: Agroetika S. de R. L. de C. V., Zapopan, 45234 (MX)
(72) Inventor: MAZZOLO, Sergio Aldo, Ciudad Bugambilias Zapopan, 45238 (MX)
(74) Representative: ZBM Patents - Zea, Barlocci & Markvardsen
(86) International application number: PCT/MX2022/050006
(87) International publication number: WO 2022/220671

(57) **Abstract**

Method to reduce contamination of dehydrated products, which includes: reception of the contaminated and partially or totally dehydrated product; analyze the contaminated and dehydrated product to determine the type and degree of contamination it has; through conventional analysis techniques that detect the presence of contaminating agents; place the contaminated and dehydrated product inside containers made of a material resistant to high temperatures and pressure, and configured in such a way as to allow the circulation of gaseous fluids so that said gaseous fluids make uniform contact with the product to be decontaminated; subject the contaminated and dehydrated product to at least one decontamination treatment, according to the results of the contamination analysis; and package the dehydrated and decontaminated product.

## Description

### TECHNICAL FIELD OF INVENTION

The present invention relates to the technical field of agriculture and foodstuffs, because it refers to a method for reducing the contamination of dehydrated or dried products, such as agricultural products suffering from chemical, physical and/or biological contamination.

### BACKGROUND OF THE INVENTION

Currently, most of the technologies and processes that exist for cleaning, decontaminating, sanitizing, etc., agricultural products are for fresh agricultural products, such as fruits, vegetables, greens, etc. (patent documents KR20130119606 (A) CN106359553 (A) and CN107950640 (A)). Such technologies and processes are not suitable to be used for the decontamination of dried or dehydrated agricultural products.

Patent document FR2905286 (A1) refers to a method and a device for treating bulk physical and/or chemical products, preferably food products, using a gaseous fluid that, due to its nature, its composition and/or its physicochemical characteristics, is suitable to perform this treatment. For this, a perforated conveyor belt is used, so that it can be crossed (from top to bottom) by the flow of the gaseous fluid that carries out the treatment, where the holes in the belt, or its meshes if it is a mesh belt, have dimensions chosen according to the nature and size of the products in question to be treated. According to this process, the products are deposited on the conveyor with a perforated moving belt, in such a way that they are distributed on the belt forming a relatively homogeneous layer on it and, during their movement, these products are exposed, on the one hand to at least one flow of said gaseous fluid, which is generated above the belt and is directed downwards, by blowing, in such a way that it makes contact with the products and ensures their treatment and, on the other hand, to a suction developed under the moving belt or belt and which tends to press the products against it. The combination of the two operations, namely, blowing from above and suction from below, allows operation with a relatively strong flow rate, allowing a very efficient treatment, without causing dispersion or uncontrolled movement of products on the belt, which could damage them. The blowing is carried out by means of at least one band or a series of gas jets that extend sensitively and transversely with respect to the longitudinal direction of the moving belt; the series of gas jets used for blowing are placed between two neighboring suction zones; the series of gas jets used for blowing 15 are placed directly in front of a suction zone; the gaseous fluid used for blowing is hot; The gaseous fluid used for blowing is water vapor, the gaseous fluid used for blowing has the function of drying and/or defrosting the products; the gaseous fluid used for blowing is cold; The gaseous fluid used for blowing has the function of cooling or freezing the products; The gaseous fluid used for blowing is air; An additive capable of carrying out a chemical or physical treatment of the products, for example decontamination or coloring, is incorporated into the gaseous fluid before being blown in, by spraying; at least part of the gaseous fluid used for blowing results from the recirculation of the fluid that has been sucked under the belt; and the method is used to treat food products.

The method of document FR2905286 (A1) uses of a conveyor belt along which the product moves, and a sanitizing substance to help decontamination; which makes this method expensive, since it requires greater energy consumption.

As it can see, of all the systems and methods in the aforementioned documents, they mention treatment with cold or hot water, chemical disinfectants (chlorination), UV, ozone, etc., and most make washing and pasteurization, some mention sterilization and do not focus on reducing contamination of pesticides, mycotoxins and heavy metals, as the method of the present invention intends to do.

Therefore, in order to help solve the aforementioned drawbacks, a method was developed to reduce the contamination of dehydrated or dried products, such as agricultural products that come from the field or production areas, which suffer from contamination, since be it chemical, physical, biological, among others.

The characteristic details of the present invention are clearly shown in the following detailed description, figures and examples, which are attached, solely for the purpose of evidencing its conception and some of its preferred embodiments; Therefore, such detailed description, figures and examples should not be considered as a limitation to the scope of protection of the present invention.

### BRIEF DESCRIPTION OF THE FIGURE

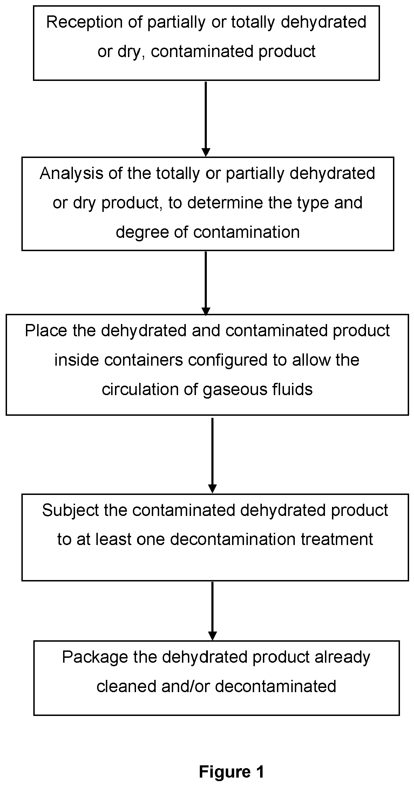

Figure 1 is a flow diagram of the method for reducing contamination of dehydrated products, according to the present invention.

### DISCLOSURE OF THE INVENTION

The present invention relates to a method to reduce the contamination of dehydrated products naturally or induced. Where said dehydrated products may be those that, due to their production, handling and storage, have some type of external contamination and require being subjected to a process to reduce their contamination and thus comply with the established safety standards; Such dehydrated products may be dehydrated or dried agricultural products, such as dried chilies, dried fruits, dried seeds, dried grains, dried leaves, dried meats, etc.

The type of external contamination can be: chemical contamination caused by pesticides, heavy metals, mycotoxins, etc.; a physical contamination caused by foreign matter, dirt, trash, dust, etc.; and/or biological contamination caused by microorganisms (bacteria, viruses, fungi, etc.), insects, among others.

Therefore, a first object of the present invention is a method to reduce contamination of dehydrated or dry products, which comprises the following steps:
i) receive the contaminated and partially or totally dehydrated product, whether due to natural or induced dehydration;
ii) analyze the contaminated and partially or totally dehydrated product, to determine the type and degree of contamination it has; through conventional analysis techniques that detect the presence of contaminating agents; where the contamination can be chemical, physical and/or biological contamination;
iii) place the contaminated and partially or totally dehydrated product, inside containers made of a material resistant to high temperatures, high vacuum, and positive pressure, and configured in such a way that they allow the circulation of gaseous fluids so that said gaseous fluids make uniform contact with the product to be decontaminated; such as baskets, baskets, grid boxes, and/or boxes open at the top with access to gaseous fluids, to name some examples;
iv) subject the contaminated and dehydrated product to at least one decontamination treatment, according to the results of the analysis of stage ii), which may be the treatment that reduces chemical, physical, and/or biological contamination, to the parameters acceptable by Safety standards; and
v) package the dehydrated product already cleaned and/or decontaminated.

A variant of the method of the present invention is when the decontamination treatment is to reduce chemical and/or biological contamination, it comprises subjecting the contaminated and dehydrated product to a temperature of 55 to 140°C, of 0.3 to 3.5 bar pressure, a vacuum of -1 to -29 mm Hg, for 15 to 90 min, with water vapor, inside a chamber or autoclave suitable for these conditions, to eliminate at least one chemical and/or biological contaminant. Where the contaminating chemical agent is selected from the following group: pesticides, toxic heavy metals, nitrates, microplastics, mycotoxins, dioxins, and polychlorinated biphenyls (PCBs), etc.; and where the biological contaminant is selected from the following group: microorganisms (bacteria, viruses, fungi, among others), and insects, etc.

A further variant of the method according to the present invention is when the decontamination treatment is to reduce physical contamination, which comprises subjecting the contaminated product to a countercurrent flow of air of 10 to 35 m/s speed, at 20°C, for 1 to 10 s, with the help of a forced reverse air circulation system, where the contaminated product travels against the current of the air, in order to clean it externally of foreign physical matter; such as: garbage, dust, crystals, thorns, bones, shells, plastics, stones, sand, gravel, dirt, personal objects, to name a few examples.

Another embodiment of the method in question is that it also comprises, optionally subjecting the dehydrated product to a treatment to reduce decontamination of metal parts, with the help of a metal detector device, in order to detect and eliminate those metal parts that could be present in the dehydrated product. Where it is preferred that this treatment that reduces contamination of metal parts is carried out after the dehydrated product leaves the treatment that reduces physical contamination.

Therefore, a second object of the present invention is a dehydrated and decontaminated product, by the method proposed by this invention, where its chemical contamination is reduced from 95 to 99.95%; Its physical contamination is reduced by up to 97%, and its biological contamination by up to 99%.

### EXAMPLES

The following examples are included in order to illustrate the conception of the invention, which should not be considered as a limitation to the scope of the present invention.

### Example 1

Chemical decontamination of a batch of dried chili (*Capsicum annuum* L.) variety 'chile de arbol'.

On October 2, 2020, a 6-ton batch of'chile de árbol' was received, coming from the plot where it was harvested already dried naturally, and was labeled with the batch number CTE 20.10.02.

### A. Initial contamination analysis

### Chemical contamination análisis

On the same day, October 2 of the same year, 24 chili peppers samples were taken at random, each sample measuring 150 g, in accordance with the IAS Accredited Testing Laboratory TL-667 analysis protocols. The samples were analyzed in the laboratory called AGQLABS located in Guadalajara, Jalisco, Mexico; where the Gc+Lc+MX-2020 analysis was applied, to detect if they were contaminated with residual chemical substances left from the agrochemicals that were applied to said crop. This analysis was carried out from October 2 to 7, 2020. The analyzes of the samples yielded the following results shown in Table 1.

As can be seen, the results in Table 1 indicated that the batch of 'chiles de árbol' was contaminated with several agrochemical substances (data in bold), which exceeded the standards allowed by the safety regulations of several countries and/or block of countries (EU). Therefore, it was determined that said batch did require chemical decontamination.

This same batch CTE 20.10.02 of dried 'tree chili' was determined if it had contamination caused by Aflatoxins, so 3 samples of 50 g each were taken. This analysis was also done in the AGROETIKA laboratory located in Zapopan, Jalisco, Mexico; where the "FAST AFLATOXINA SC" analysis was applied, from October 2 to 7, 2020. Each sample was compared with 7 standards of different wavelength absorbance concentrations (0, 2, 4, 10, 20, 50 and 100). Table 2 shows the averages of the calculated amounts of Aflatoxin for each of the samples.

**Table 1. Results in mg/Kg of chemical substances, produced by the dried 'chile de arbol' samples.**

| **Parameter** | **mg/Kg** | **US** | **UE** | **CA** | **JP** | **CN** | **MX** |
|---|---|---|---|---|---|---|---|
| 2,4,6-Triclorophenol | 0.152 | N/L | **0.030** | N/L | **0.050** | 2.00 | N/L |
| Acetamiprid | 0.028 | 0.200 | 0.300 | 0.200 | 2.00 | 0.20 | 0.20 |
| Ametoctradin | 0.032 | 1.50 | 2.00 | 1.50 | 50.0 | N/L | 1.50 |
| Azoxystrobin | 0.016 | 3.00 | 3.00 | 3.00 | 30.0 | 2.00 | 2.0 |
| Ben-Carb-Tiof M (Suma) | 0.387 | N/L | N/L | **0.100** | 3.00 | 2.00 | N/L |
| Bifenthrin | 0.016 | 0.500 | 0.500 | 0.500 | 0.500 | 0.50 | 0.50 |
| Carbendazim and Benomyl | 0.371 | N/L | **0.100** | **0.100** | 3.00 | N/L | N/L |
| Chlorantraniliprole | 0.012 | 1.40 | 1.00 | 0.700 | 20.0 | 0.60 | 1.40 |
| Chlorfenapyr | 0.542 | 2.00 | **0.010** | 2.00 | 5.00 | N/L | 1.00 |
| Clothianidin | 0.024 | 0.800 | 0.040 | 0.200 | 3.00 | 0.05 | 0.80 |
| Difenoconazole | 0.092 | 0.600 | 0.900 | 0.600 | 1.00 | 1.00 | 0.60 |
| Dimethomorph | 0.088 | 1.50 | 1.00 | 3.00 | 1.00 | 3.00 | 1.50 |
| Dinotefuran | 0.052 | 0.700 | **0.010** | 0.100 | 10.0 | 0.50 | 0.70 |
| Flusilazole | 0.012 | N/L | **0.010** | 0.100 | 0.300 | N/L | N/L |
| Lufenuron | 0.080 | N/L | 0.800 | 0.100 | 1.00 | N/L | N/L |
| Methyl Thiophanate (SP) | 0.016 | N/L | 0.100 | 0.100 | 3.00 | 2.00 | N/L |
| Pyraclostrobin | 0.211 | 1.40 | 0.500 | 1.00 | 3.00 | 0.50 | 0.50 |
| Prochloraz (SP) | 0.020 | N/L | 0.030 | 0.100 | 0.050 | 2.00 | N/L |
| Prochloraz (Suma) | 0.309 | N/L | **0.030** | N/L | **0.050** | 2.00 | N/L |
| Tebuconazole | 0.120 | 1.30 | 0.600 | **0.100** | 5.00 | 2.00 | 1.30 |
| Tebufenozide | 0.012 | 1.00 | 1.50 | 0.200 | 10.0 | 1.00 | 1.00 |
| Thiamethoxam (SP) | 0.016 | 0.250 | 0.700 | 0.250 | 3.00 | 1.00 | 0.25 |
| Thiamethoxam (Suma) | 0.040 | 0.250 | N/L | 0.250 | 3.00 | N/L | 0.25 |
| Trifloxystrobin | 0.012 | 0.500 | 0.400 | 0.500 | 2.00 | 0.50 | 0.50 |
| Zeta-cypermethrin | 0.068 | 0.200 | 0.500 | 0.100 | 0.500 | 0.50 | 0.20 |

| | | | | | | | |
|---|---|---|---|---|---|---|---|
| *Results in bold exceeded the allowed limit, US* = *United States, EU* = *European Union, CA* = *Canada, JP* = *Japan, CN* = *China, MX* = *Mexico, N*/*L* = *not legislated.* | | | | | | | |

According to the data shown in Table 2, this batch also had Aflatoxin contamination, since the allowed limit is 20 µg/Kg; Therefore, it was also determined that Aflatoxin decontamination was required.

**Table 2. Average amounts of Aflatoxin in the dried 'chile de arbol' samples.**

| **Sample** | **µg/Kg** |
|---|---|
| 1 | 38.00 |
| 2 | 30.05 |
| 3 | 16.77 |

### Physical contamination análisis

A physical contamination analysis was also carried out on said batch CTE 20.10.02, for which 12 samples were taken. This analysis was carried out in the AGROETIKA Laboratory, visually (macroscopic) on a ROSTECH WT3003GH scale, a microscope. ZEISS 18U640630, and a CEM 9000 moisture analyzer device; on October 3, 2020. The results are presented in Table 3.

Due to the presence of bio-contamination due to the presence of feces, the presence of pathogenic viruses is possible, such as hepatitis virus, enterovirus, etc. A high content of dirt was observed in the form of dust, raw material attacked by insects.

It is important to mention that, for this type of product to be accepted for consumption, it must have physical contamination of less than 6%, and a maximum presence of feces of 2,203 mg/Kg, a maximum of 3% of attacked product. by fungi, insects and others (FDA).

**Table 3. Macroscopic report of the dried 'chile de arbol' samples, to determine their physical contamination.**

| **Sample** | **g** | **IV** | **IT** | **EM** | **EO** | **PE** | **MD** | **ID** | **CA** | **OC** |
|---|---|---|---|---|---|---|---|---|---|---|
| 1 | 114 | 1 | 1 | 0 | 0 | 96 | 0 | 7 | 0 | 0 |
| 2 | 89 | 0 | 0 | 0 | 0 | 96 | 9 | 0 | 0 | 7 |
| 3 | 76 | 0 | 0 | 78 | 0 | 97 | 0 | 0 | 0 | 1 |
| 4 | 92 | 0 | 0 | 0 | 0 | 94 | 5 | 0 | 0 | 0 |
| 5 | 97 | 0 | 1 | 0 | 0 | 98 | 0 | 0 | 0 | 0 |
| 6 | 101 | 1 | 0 | 0 | 0 | 98 | 8 | 21 | 0 | 0 |
| 7 | 79 | 0 | 0 | 0 | 0 | 99 | 0 | 0 | 0 | 1 |
| 8 | 86 | 0 | 0 | 0 | 0 | 96 | 8 | 0 | 0 | 0 |
| 9 | 99 | 1 | 0 | 0 | 0 | 98 | 0 | 12 | 0 | 1 |
| 10 | 104 | 0 | 1 | 0 | 0 | 98 | 12 | 0 | 0 | 0 |
| 11 | 91 | 0 | 0 | 0 | 0 | 99 | 0 | 0 | 0 | 0 |
| 12 | 86 | 0 | 0 | 0 | 0 | 97 | 9 | 0 | 0 | 0 |
| Total | 1,023 | 3 | 3 | 78 | 0 | 1,166 | 51 | 40 | 0 | 10 |

| | | | | | | | | | | |
|---|---|---|---|---|---|---|---|---|---|---|
| *IV* = *number of live insects, IT* = *Number of total insects, EM* = *mammalian's excrement (mg), EO* = *other excreta (mg), PE* = *examined weight (g), MD* = *fungi (g), ID* = *infected product (g), CA* = *animal contamination (g),* OC = *other contaminants (g).* | | | | | | | | | | |

### B. Decontamination treatment of batch CTE 20.10.02

### Chemical decontamination

Once the results of the chemical and Aflatoxin analysis were obtained, batch CTE 20.10.02 of dried 'chile de árbol' was disinfected. To do this, the dried chilies were placed in plastic boxes with grids to allow the circulation of water vapor so that the steam makes uniform contact with the product to be decontaminated.

The chili peppers were subjected to a vacuum of -25 mm Hg, a temperature of 120°C, at 1.5 bar pressure, for 70 min, with water vapor, inside an autoclave.

### Physical decontamination

Afterwards, the chili peppers were transferred to a countercurrent air flow of 10 to 35 m/s speed, at 20°C, for 1 to 10 s, with the help of a forced reverse air circulation system, where the dehydrated product traveled to against the current of the air, in order to clean it externally of foreign matter, garbage, dust, etc.

Once the chili peppers came out of the forced reverse air circulation system, they were subjected to a metal detector device, in order to detect and eliminate those metal pieces that could be contaminating the dried chiles. In this case, input impurity analyzes were not performed.

Finally, the decontaminated and clean chili peppers were packaged conventionally in containers suitable for distribution.

### C. Results

### Chemical decontamination

The dehydrated and treated product ended up with a chemical contamination of 5% of the initial value to values not detectable by chromatography, that is, with a general reduction in its contamination of around 95%.

Regarding contamination by Aflatoxins, it had a contamination reduced to 0.5% of Aflatoxins, with respect to the initial value, which is already within the parameter allowed by the Safety Standard.

### Physical decontamination

Regarding physical contamination reduced to below 3%, 0 mg of feces, and maximum 1% of product attacked by fungi; and totally free of dust and dirt.

Therefore, this decontamination methodology promises good results in the treatment of contaminated products, in order to comply with the safety standards established in several countries.

## Claims

1. A method to reduce contamination of dehydrated or dried products, comprising:
i) receive of the contaminated and partially or totally dehydrated product, whether due to natural or induced dehydration;
ii) analyze the contaminated and partially or totally dehydrated product, to determine the type and degree of contamination it has; through conventional analysis techniques that detect the presence of contaminating agents; where the contamination is a chemical, physical and/or biological contamination;
iii) place the contaminated and partially or totally dehydrated product inside containers made of a material resistant to high temperatures and pressure, and configured in such a way as to allow the circulation of gaseous fluids so that said gaseous fluids make uniform contact with the product. to decontaminate;
iv) subject the contaminated and dehydrated product to at least one decontamination treatment, according to the type of contamination that the results of the analysis of stage ii) indicate; where the decontamination treatment is that treatment that reduces chemical, physical, and/or biological contamination to the parameters acceptable by the Safety Standards; and
v) package the dehydrated product already cleaned and/or decontaminated.

2. The method of the previous claim, wherein the containers are: baskets, baskets, grid boxes, and/or boxes open at the top with access to gaseous fluids.

3. The method of claim 1, wherein the treatment that reduces chemical and/or biological contamination comprises subjecting the contaminated and dehydrated product to a temperature of 55 to 140°C, of 0.3 to 3.5 bar pressure, a vacuum of -1 to -29 mm Hg, for 15 to 90 min, with water vapor, inside a chamber or autoclave suitable for these conditions, to eliminate at least one chemical and/or biological contaminant.

4. The method according to the previous claim, wherein the chemical contaminant is selected from the following group: pesticides, toxic heavy metals, nitrates, microplastics, mycotoxins, dioxins, and polychlorinated biphenyls (PCBs).

5. The method of claim 3, wherein the biological contaminant is selected from the following group: microorganisms, and insects.

6. The method of claim 1, wherein the physical decontamination treatment comprises subjecting the contaminated product to a countercurrent flow of air of 10 to 35 m/s speed, at 20°C, for 1 to 10 s, with the help of a forced reverse air circulation system, where the contaminated product travels against the current of the air, in order to clean it externally of foreign physical matter.

7. The method according to the previous claim, where the foreign matter is: garbage, dust, crystals, thorns, bones, shells, scales, plastics, stones, sand, gravel, earth, and personal objects.

8. The method of claim 1, furthermore comprising, subjecting the dehydrated product to a treatment to reduce contamination caused by metal parts, in a metal detector apparatus, in order to detect and eliminate those metal parts that could be in the dehydrated product.

9. The method according to claim 1, wherein the contaminated and partially or totally dehydrated product is an agricultural-livestock product.

10. The method of the previous claim, where the agricultural product is an agricultural product.

11. The method of the preceding claim, wherein the agricultural product is a dried chili type of "chile de árbol" (*Capsicum* spp.).

12. A product dehydrated and decontaminated by the method according to any of the preceding claims, comprising: a reduced chemical contamination from 95 to 99.95%; a reduced physical contamination by up to 97%, and a reduced biological contamination by up to 99%.
